# EUROPÄISCHE PATENTSCHRIFT

(11) **EP 2 859 639 B1**
(45) Veröffentlichungstag und Bekanntmachung des Hinweises auf die Patenterteilung: **22.03.2017**
(21) Anmeldenummer: 13724845.6
(22) Anmeldetag: 24.05.2013
(51) Int. Cl.: H02J 7/00, H02J 7/04, B60L 11/18, H02M 3/00

(54) **LADUNGSAUSGLEICHSSCHALTUNG FÜR EINEN ENERGIESPEICHER UND VERFAHREN ZUM AUSGLEICHEN VON LADUNGSUNTERSCHIEDEN IN EINEM ENERGIESPEICHER**
CHARGE BALANCING CIRCUIT FOR AN ENERGY STORE AND METHOD FOR BALANCING CHARGE DIFFERENCES IN AN ENERGY STORE
CIRCUIT DE COMPENSATION DES CHARGES POUR UN ACCUMULATEUR D'ÉNERGIE ET PROCÉDÉ POUR LA COMPENSATION DES DIFFÉRENCES DE CHARGE DANS UN ACCUMULATEUR D'ÉNERGIE

(30) Priorität: 12.06.2012 DE 102012209773
(43) Veröffentlichungstag der Anmeldung: 15.04.2015
(73) Patentinhaber: Robert Bosch GmbH, 70442 Stuttgart (DE)
(72) Erfinder: DITTMER, Bernd, 71640 Ludwigsburg (DE); IMRE, Arpad, 71665 Vaihingen (DE); SCHMIDT, Alexander, 78166 Donaueschingen (DE)
(86) Internationale Anmeldenummer: PCT/EP2013/060763
(87) Internationale Veröffentlichungsnummer: WO 2013/186030

(56) Entgegenhaltungen:
- EP-A2- 0 432 639
- US-A1- 2011 234 164

## Beschreibung

Die Erfindung betrifft eine Ladungsausgleichsschaltung für einen Energiespeicher und ein Verfahren zum Ausgleichen von Ladungsunterschieden in einem Energiespeicher, insbesondere in einem modular aufgebauten Energiespeicher mit einer Vielzahl von in Reihe verschalteten Energiespeicherzellen.

### Stand der Technik

Es zeichnet sich ab, dass in Zukunft sowohl bei stationären Anwendungen, wie z.B. Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren.

Für elektrische Antriebssysteme elektrisch betriebener Fahrzeuge beispielsweise wird üblicherweise ein Gleichspannungszwischenkreis von einem Strang aus seriell verschalteten Batteriemodulen gespeist. Um die für eine jeweilige Anwendung gegebenen Anforderungen an Leistung und Energie erfüllen zu können, werden häufig mehrere Batteriemodule in einer Traktionsbatterie in Serie geschaltet. Die Gesamtkapazität und die verfügbare Leistung derartiger Traktionsbatterien hängt dabei von den Eigenschaften der einzelnen Batteriemodule ab. Es ist daher wünschenswert, alle Batteriemodule auf dem gleichen Ladungszustand und dem gleichen Spannungsniveau zu halten, um die Belastung auf die Traktionsbatterie durch Lade- und Entladevorgänge gleichmäßig auf die einzelnen Batteriemodule verteilen zu können.

Es existieren passive Ausgleichsverfahren, bei denen Einzelspannungen der Batteriemodule mit einer Gesamtspannung verglichen werden. Auf der Basis dieses Vergleichs können bei Abweichungen einzelne Batteriemodule über ohmsche Widerstände selektiv entladen werden. Aktive Ausgleichsverfahren basieren auf einer Umverteilung von Ladung aus Batteriemodulen höheren Ladungszustands auf Batteriemodule niedrigeren Ladungszustands durch Umverteilungseinrichtungen bzw. Ladungszwischenspeicher.

Die Druckschriften DE 10 2010 047 685 A1, DE 10 2010 017 439 A1, EP 0 432 639 A2, US 2011/234164 A1 und DE 10 2009 054 818 A1 beispielsweise offenbaren jeweils Schaltungsanordnungen aus seriell verschalteten Batteriemodulen, welche durch geeignete Ansteuerverfahren in ihrem Ladungszustand ausgeglichen werden können.

### Offenbarung der Erfindung

Die vorliegende Erfindung schafft gemäß einem Aspekt eine Ladungsausgleichschaltung für einen Energiespeicher mit einer Vielzahl von in Serie geschalteten Energiespeicherzellen und -modulen, mit einem Wechselrichter, dessen Eingangsanschlüsse mit Anschlüssen des Energiespeichers gekoppelt sind, und welcher dazu ausgelegt ist, die Gesamtspannung des Energiespeichers in eine Ausgleichsspannung umzurichten, einem Transformator mit einer primärseitigen Wicklung, die mit dem Wechselrichter gekoppelt ist, und mit einer Vielzahl von sekundärseitigen Wicklungen, einer Vielzahl von Gleichrichtern, welche mit jeweils einer der Vielzahl von sekundärseitigen Wicklungen gekoppelt sind, und welche dazu ausgelegt sind, die Ausgleichsspannung des Wechselrichters gleichzurichten und die gleichgerichtete Ausgleichsspannung in jeweils eines der Vielzahl von Energiespeicherzellen und -modulen einzuspeisen, und einer Steuervorrichtung, welche mit dem Wechselrichter gekoppelt ist, und welche dazu ausgelegt ist, den Pegel der Ausgleichsspannung in Abhängigkeit von der Gesamtspannung des Energiespeichers und der Anzahl der Energiespeicherzellen und -module des Energiespeichers einzustellen.

Gemäß einem weiteren Aspekt schafft die vorliegende Erfindung ein System mit einem Energiespeicher, welcher Anschlüsse zum Bereitstellen einer Gesamtspannung und eine Vielzahl von zwischen den Anschlüssen in Serie geschalteten Energiespeicherzellen und -modulen aufweist, und einer erfindungsgemäßen Ladungsausgleichschaltung, wobei die Vielzahl von Gleichrichtern der Ladungsausgleichschaltungjeweils mit einem der Vielzahl von Energiespeicherzellen und -modulen gekoppelt sind.

Gemäß einem weiteren Aspekt schafft die vorliegende Erfindung ein Verfahren zum Ausgleichen von Ladungsunterschieden in einem Energiespeicher, welcher Anschlüsse zum Bereitstellen einer Gesamtspannung und eine Vielzahl von zwischen den Anschlüssen in Serie geschalteten Energiespeicherzellen und -modulen aufweist, mit den Schritten des Umrichtens der Gesamtspannung des Energiespeichers in eine Ausgleichsspannung, deren Pegel in Abhängigkeit von der Gesamtspannung des Energiespeichers und der Anzahl der Energiespeicherzellen und -module des Energiespeichers einstellbar ist, des Übertragens der Ausgleichsspannung mit einem Transformator auf eine Vielzahl von sekundärseitigen Wicklungen des Transformators, des Gleichrichtens der übertragenen Ausgleichsspannungen, und des Einspeisens der gleichgerichteten Ausgleichsspannungen in jeweils eines der Vielzahl von Energiespeicherzellen und -modulen.

### Vorteile der Erfindung

Es ist Idee der vorliegenden Erfindung, seriell verschaltete Energiespeicherzellen und - module eines Energiespeichers durch eine automatische und stetige Einspeisung einer Ausgleichsspannung in die einzelnen Energiespeicherzellen und -module bereits während des Betriebs in ihren Ladungszuständen auszugleichen. Hierzu wird eine Gegentaktwandlerschaltung verwendet, die eine momentane Gesamtspannung des Energiespeichers in eine Ausgleichsspannung umrichtet, die einer Sollspannung eines einzelnen Energiespeichermoduls entspricht, und diese Ausgleichsspannung in jede der Energiespeicherzellen und -module einspeist. Dadurch tritt je nach Abweichung des Ladungszustands jedes einzelnen Energiespeichermoduls von seiner Sollspannung automatisch ein Ausgleichsstrom auf, der die Abweichung wieder ausgleichen kann.

Besonders vorteilhaft ist es hierbei, dass das Ausgleichen der Ladungszustände unabhängig vom momentanen Belastungszustand des Energiespeichers bzw. der einzlenen Energiespeicherzellen und -module erfolgen kann. Ferner ist eine Einhaltung von Sicherheitsgrenzen bezüglich der Lade- und Entladespannungsgrenzen der einzelnen Energiespeicherzellen und -module bereits durch das Wirkprinzip des automatischen Ladungsausgleichs sichergestellt.

Der Ladungsausgleich erfolgt in vorteilhafter Weise weitgehend energieneutral, das heißt, die Energie, die aus Energiespeicherzellen und -modulen höheren Ladungszustands zu Ausgleichszwecken entnommen wird, wird nahezu vollständig wieder in Energiespeicherzellen und -module niedrigeren Ladungszustands eingespeist.

Weiterhin besteht ein Vorteil der erfindungsgemäßen Vorgehensweise darin, dass weder Spannungen an einzelnen Energiespeicherzellen und -modulen vorgenommen noch zusätzliche Komponenten wie Ausgleichswiderstände oder Leistungsschalter zum Ankoppeln der Energiespeicherzellen und -module an die Ladungsausgleichsschaltung vorgesehen werden müssen. Dies senkt einerseits die Fertigungskosten, den Bauraumbedarf und das Systemgewicht der Ladungsausgleichsschaltung. Andererseits wird die Ausfallwahrscheinlichkeit des Energiespeichers verringert, da keine möglicherweise ausfallgefährdeten Zusatzkomponenten wie Schalter oder Relais verwendet werden.

Ferner kann mit einem Vorsehen einer Ladungsausgleichsschaltung für einen Energiespeicher auf andere Funktionen, wie beispielsweise eine Unter- und Überspannungsüberwachung im Rahmen von ASIL-Vorgaben ("automotive safety integrity level", sicherheitsrelevante Vorschriften im Automobilbereich nach ISO-Norm 26262), verzichtet werden, da eine Unter- oder Überspannung in den einzelnen Energiespeicherzellen und -modulen mit dem erfindungsgemäßen automatischen Ladungsausgleich nicht mehr auftreten kann.

Gemäß einer Ausführungsform der erfindungsgemäßen Ladungsausgleichsschaltung kann der Transformator weiterhin eine sekundärseitige Hilfswicklung aufweisen, welche mit der Steuervorrichtung gekoppelt ist. Gemäß einer Ausführungsform der erfindungsgemäßen Ladungsausgleichsschaltung kann die Steuervorrichtung weiterhin dazu ausgelegt sein, die Ausgleichsspannung über die sekundärseitige Hilfswicklung zu erfassen, und den Wechselrichter in Abhängigkeit von der erfassten Ausgleichsspannung zu regeln. Dies bietet den Vorteil, dass eine dynamische Regelung der Ausgleichsspannung möglich ist, die direkt auf die Ausgangsspannung des Wechselrichters zurückgreifen kann.

Gemäß einer Ausführungsform der erfindungsgemäßen Ladungsausgleichsschaltung kann die Ladungsausgleichsschaltung weiterhin eine Vielzahl von Filterstufen aufweisen, welche jeweils zwischen die Vielzahl von Gleichrichtern und die Vielzahl von Energiespeicherzellen und -modulen gekoppelt sind, und welche dazu ausgelegt sind, die gleichgerichtete Ausgleichsspannung zu glätten. Vorteilhafterweise können die Vielzahl von Filterstufen dabei jeweils Tiefpassfilter mit einer Spule als Längszweipol und einem Kondensator als Querzweipol aufweisen. Dadurch können die Filterstufen als Abwärtswandler wirken, die eine gleichmäßige Gleichspannung ohne Schwankungen für das Ausgleichen der Ladungszustände der einzelnen Energiespeicherzellen und -module bereitstellen kann. Dies ermöglicht einen möglichst verlustarmen Ausgleich der Ladungszustände.

Gemäß einer Ausführungsform des erfindungsgemäßen Verfahrens erfolgt weiterhin ein Glätten der gleichgerichteten Ausgleichsspannungen jeweils mithilfe einer Filterstufe. Die Filterstufen können eine gleichmäßige Gleichspannung ohne Schwankungen für das Ausgleichen der Ladungszustände der einzelnen Energiespeicherzellen und -module bereitstellen. Dies ermöglicht einen möglichst verlustarmen Ausgleich der Ladungszustände.

Gemäß einer Ausführungsform des erfindungsgemäßen Verfahrens kann das Umrichten der Gesamtspannung des Energiespeichers in eine Ausgleichsspannung ein Erfassen der Ausgleichsspannung über eine sekundärseitige Hilfswicklung des Transformators und ein Regeln des Umrichtens in Abhängigkeit von der erfassten Ausgleichsspannung umfassen. Dies bietet den Vorteil, dass eine dynamische Regelung der Ausgleichsspannung möglich ist, die direkt auf die Ausgangsspannung des Wechselrichters zurückgreifen kann.

Gemäß einer weiteren Ausführungsform des erfindungsgemäßen Systems können die Energiespeicherzellen und -module Lithium-Ionen-Akkumulatoren umfassen. Diese Art von Energiespeicherzellen wird häufig in elektrischen Antriebssystemen eingesetzt. Mit der erfindungsgemäßen Ladungsausgleichsschaltung kann die Lebensdaer von Lithium-Ionen-Akkumulatoren erheblich verlängert werden.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit einer Ladungsausgleichsschaltung gemäß einer Ausführungsform der vorliegenden Erfindung;
- Fig. 2: eine schematische Darstellung eines Systems mit einer Ladungsausgleichsschaltung gemäß einer weiteren Ausführungsform der vorliegenden Erfindung;
- Fig. 3: eine schematische Darstellung eines Systems mit einer Ladungsausgleichsschaltung gemäß einer weiteren Ausführungsform der vorliegenden Erfindung;
- Fig. 4: eine schematische Darstellung eines Systems mit einer Ladungsausgleichsschaltung gemäß einer weiteren Ausführungsform der vorliegenden Erfindung; und
- Fig. 5: eine schematische Darstellung eines Verfahrens zum Ausgleichen von Ladungsunterschieden in einem Energiespeicher gemäß einer weiteren Ausführungsform der vorliegenden Erfindung.

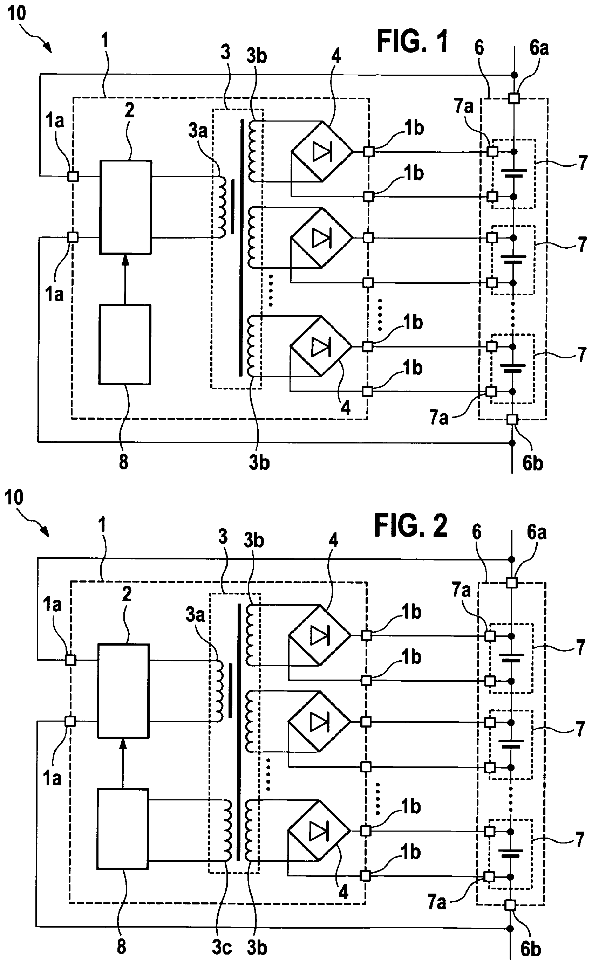

Fig. 1 zeigt ein System 10 mit einem Energiespeicher 6 und einer Ladungsausgleichsschaltung 1. Das System 10 kann beispielsweise Teil eines elektrischen Antriebssystems eines elektrisch betriebenen Fahrzeugs sein. Dabei kann der Energiespeicher 6 beispielsweise eine Traktionsbatterie des elektrisch betriebenen Fahrzeugs darstellen. Der Energiespeicher 6 kann beispielsweise eine Vielzahl k von seriell verschalteten Energiespeicherzellen und -modulen 7 umfassen. Die Energiespeicherzellen und -module 7 können dabei jeweils ein oder mehrere wiederaufladbare elektrische bzw. elektrochemische Energiespeicherzellen, zum Beispiel Lithium-Ionen-Akkumulatoren oder -Zellen aufweisen. Die Anzahl k der Energiespeicherzellen und -module 7 ist in Fig. 1 beispielhaft mit drei dargestellt, wobei jedoch jede andere Anzahl an Energiespeicherzellen und -modulen 7 ebenso möglich sein kann.

Der Energiespeicher 6 kann über Ausgangsanschlüsse 6a verfügen, an denen eine Gesamtspannung U_{G} des Energiespeichers 6 als Summe der Modulspannungen U_{Mk} der einzelnen Energiespeicherzellen und -module 7 bereitgestellt werden kann. Dabei gilt der Zusammenhang U_{G} = Σₖ U_{Mk}. Jedes der Energiespeicherzellen und -module 7 sollte dabei idealerweise eine Sollspannung UM aufweisen, die sich nicht von den Sollspannungen der anderen Energiespeicherzellen und -module 7 unterscheidet. Aufgrund von fertigungs-, temperatur- oder alterungsbedingten Effekten können die Ladungszustände und damit die Sollspannungen der Energiespeicherzellen und -module 7 im Laufe des Betriebs des Energiespeichers 6 voneinander abweichen.

Zum Ausgleich der Ladungszustände weist das System 10 eine Ladungsausgleichsschaltung 1 auf, die Eingangsanschlüsse 1 a aufweist, welche mit den Eingangsanschlüssen eines Wechselrichters 2 verbunden sind. Der Wechselrichter 2 kann beispielsweise ein selbstgeführter Inverter in Vollbrückenschaltung sein, der als aktive Schaltelemente Leistungshalbleiterschalter aufweist, zum Beispiel MOSFET-Schalter oder IGBT-Schalter mit parallel dazu geschalteter Freilaufdiode aufweisen. Der Wechselrichter kann auch zweistufig ausgeführt sein, das heißt die erste Stufe setzt die Gesamtspannung U_{G} auf eine niedrigere Zwischenspannungslage, beispielsweise mithilfe eines Drosseltiefsetzstellers. Die zweite Stufe beinhaltet zum Beispiel den Inverter in Vollbrückenschaltung wie oben beschrieben, um das Übersetzungsverhältnis im Transformator 3 zu reduzieren. Die Eingangsanschlüsse 1 a sind mit den Anschlüssen 6a, 6b des Energiespeichers 6 gekoppelt. Der Wechselrichter 2 dient zum Umrichten der Gesamtspannung U_{G} des Energiespeichers 6 in eine Ausgleichsspannung U_{A}. Die Ausgleichsspannung U_{A}. wird in einen Transformator 3 mit einer primärseitigen Wicklung 3a, die mit dem Wechselrichter 2 gekoppelt ist, eingespeist. Der Transformator 3 weist sekundärseitig eine Vielzahl von sekundärseitigen Wicklungen 3b auf, auf die die Ausgleichsspannung U_{A} jeweils übertragen werden kann. Der Transformator 3 kann beispielsweise ein Hochfrequenztransformator ohne Luftspalt sein.

Die Ladungsausgleichschaltung 1 weist weiterhin eine Vielzahl von Gleichrichtern 4 auf, welche mit jeweils einer der Vielzahl von sekundärseitigen Wicklungen 3b gekoppelt sind. Die Gleichrichter 4 können beispielsweise Brückengleichrichter sein, wie in Fig. 1 dargestellt. Alternativ kann es auch möglich sein, die Gleichrichter 4 als Synchrongleichrichter auszugestalten. Die Gleichrichter 4 sind dazu ausgelegt, die übertragene Ausgleichsspannung U_{A} des Wechselrichters 2 gleichzurichten und die gleichgerichtete Ausgleichsspannung U_{A} in jeweils eines der Vielzahl von Energiespeicherzellen und -modulen 7 einzuspeisen. Dazu sind die Ausgangsanschlüsse 1 b der Gleichrichter 4 jeweils mit entsprechenden Modulanschlüssen 7a der Energiespeicherzellen und -module 7 gekoppelt.

Wenn die Modulspannung U_{Mk} eines Energiespeichermoduls 7 kleiner als die Ausgleichsspannung U_{A} ist, so fließt ein Ladestrom von der entsprechenden sekundärseitigen Wicklung 3b des Transformators 3 in das Energiespeichermodul 7 und erhöht damit seinen Ladungszustand. Umgekehrt fließt kein ladestrom von der entsprechenden sekundärseitigen Wicklung 3b des Transformators 3, wenn die Modulspannung U_{Mk} eines Energiespeichermoduls 7 größer als die Ausgleichsspannung U_{A} ist. Um zu gewährleisten, dass alle Energiespeicherzellen und -module 7 eine Modulspannung U_{Mk} aufweisen, die der Sollspannung UM entspricht, kann der Wechselrichter 2 derart angesteuert werden, dass die Ausgleichsspannung U_{A} in Abhängigkeit von der Anzahl k der Energiespeicherzellen und -module 7 und der Gesamtausgangsspannung U_{G} eingestellt wird.

Dazu umfasst die Ladungsausgleichsschaltung 1 eine Steuervorrichtung 8, welche mit dem Wechselrichter 2 gekoppelt ist. Die Steuervorrichtung 8 kann beispielsweise dazu ausgelegt sein, den Pegel der Ausgleichsspannung U_{A} in Abhängigkeit von der Gesamtspannung U_{G} des Energiespeichers 6 und der Anzahl k der Energiespeicherzellen und -module 7 des Energiespeichers 6 einzustellen. Hierzu kann die Steuervorrichtung 8 die Ausgleichsspannung U_{A} beispielsweise auf einen Pegel von U_{A} = U_{G}/k regeln. Die Steuervorrichtung 8 kann beispielsweise ein Mikrocontroller oder ein Mikroprozessor sein.

Mit der beschriebenen Vorgehensweise ist die Einstellung der Ausgleichsspannung U_{A} und damit der Ladungsausgleich einerseits nahezu verlustfrei, wenn man von den geringfügigen Verlusten im Wechselrichter 2 absieht. Andererseits erfolgt der Ladungsausgleich unabhängig vom aktuellen Belastungszustand der Energiespeicherzellen und -module 7. Mit der Ladungsausgleichsschaltung 1 kann das Auftreten von Abweichungen der Modulspannungen U_{Mk} von der Sollspannung U_{Mk} effektiv und automatisch während des Betriebs des Energiespeichers 6 verhindert werden. Dies erhöht die Lebensdauer des Energiespeichers 6 erheblich.

Fig. 2 zeigt eine schematische Darstellung eines weiteren Systems 10 mit einem Energiespeicher 6 und einer Ladungsausgleichsschaltung 1. Zusätzlich zu den bereits im Hinblick auf Fig. 1 erläuterten Komponenten weist das System 10 in Fig. 2 einen Transformator 3 mit einer sekundärseitigen Hilfswicklung 3c aufweist, welche mit der Steuervorrichtung 8 gekoppelt ist. Die Steuervorrichtung 8 kann dazu ausgelegt sein, die Ausgleichsspannung U_{A} über die sekundärseitige Hilfswicklung 3c zu erfassen, und den Wechselrichter 2 in Abhängigkeit von der erfassten Ausgleichsspannung U_{A} zu regeln.

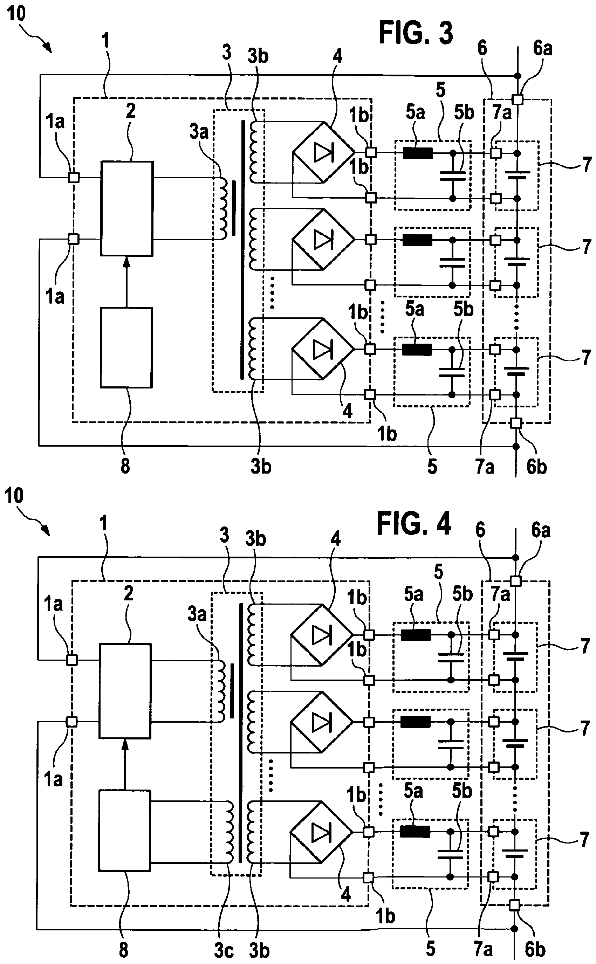

Fig. 3 zeigt eine schematische Darstellung eines weiteren Systems 10 mit einem Energiespeicher 6 und einer Ladungsausgleichsschaltung 1. Zusätzlich zu den bereits im Hinblick auf Fig. 1 erläuterten Komponenten weist das System 10 in Fig. 3 eine Vielzahl von Filterstufen 5 auf, welche jeweils zwischen Gleichrichter 4 und die Energiespeicherzellen und -module 7 gekoppelt sind. Die Filterstufen 5 sind dazu ausgelegt, die gleichgerichtete Ausgleichsspannung U_{A} zu glätten. Die Filterstufen 5 können beispielsweise jeweils als Tiefpassfilter ausgebildet sein, die mit einer Spule 5a als Längszweipol und einem Kondensator 5b als Querzweipol ausgestaltet sind.

Fig. 4 zeigt eine schematische Darstellung eines weiteren Systems 10 mit einem Energiespeicher 6 und einer Ladungsausgleichsschaltung 1. In dem System 10 ist sowohl die sekundärseitige Hilfswicklung 3c der Fig. 2 als auch die Filterstufen 5 der Fig. 3 vorgesehen.

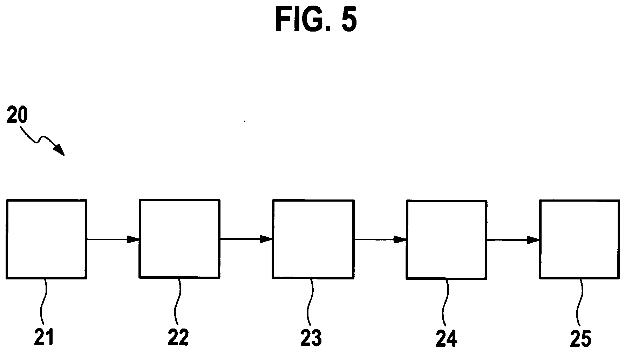

Fig. 5 zeigt eine schematische Darstellung eines Verfahrens 20 zum Ausgleichen von Ladungsunterschieden in einem Energiespeicher, beispielsweise in dem Energiespeicher 6 der Fig. 1 bis 4. Das Verfahren kann dazu beispielsweise die in den Fig. 1 bis 4 beispielhaft dargestellte Ladungsausgleichsschaltung 1 verwenden.

In einem ersten Schritt 21 erfolgt ein Umrichten der Gesamtspannung U_{G} des Energiespeichers 6 in eine Ausgleichsspannung U_{A}, deren Pegel in Abhängigkeit von der Gesamtspannung U_{G} des Energiespeichers 6 und der Anzahl der Energiespeicherzellen und -module 7 des Energiespeichers 6 einstellbar ist. Beispielsweise kann die die Ausgleichsspannung U_{A} beispielsweise auf einen Pegel von U_{A} = U_{G}/k eingestellt werden. Dazu kann beispielsweise die Ausgleichsspannung U_{A} über eine sekundärseitige Hilfswicklung 3c des Transformators 3 erfasst werden, so dass der Pegel der Ausgleichsspannung U_{A} in Abhängigkeit von dem über die sekundärseitige Hilfswicklung 3c erfassten Istwerts geregelt werden kann.

In einem zweiten Schritt 22 erfolgt ein Übertragen der Ausgleichsspannung U_{A} mit einem Transformator 3 auf eine Vielzahl von sekundärseitigen Wicklungen 3b des Transformators 3. Die übertragene Ausgleichsspannung U_{A} kann in einem Schritt 23 gleichgerichtet werden. Gegebenenfalls kann in einem Schritt 24 ein Glätten der gleichgerichteten Ausgleichsspannung U_{A} jeweils mithilfe einer Filterstufe 5 erfolgen. In einem Schritt 25 können die gleichgerichteten Ausgleichsspannungen dann in jeweils eines der Vielzahl von Energiespeicherzellen und -modulen 7 eingespeist werden.

## Patentansprüche

1. Ladungsausgleichschaltung (1) für einen Energiespeicher (6) mit einer Vielzahl von in Serie geschalteten Energiespeicherzellen und -modulen (7), mit einem Transformator (3) mit einer primärseitigen Wicklung (3a) und mit einer Vielzahl von sekundärseitigen Wicklungen (3b), **gekennzeichnet durch** die folgenden Merkmale:
- einen Wechselrichter (2), dessen Eingangsanschlüsse (1a) mit Anschlüssen (6a, 6b) des Energiespeichers (6) gekoppelt sind, und welcher dazu ausgelegt ist, die Gesamtspannung des Energiespeichers (6) in eine Ausgleichsspannung umzurichten,
- der Transformator (3) ist mit dem Wechselrichter (2) gekoppelt,
- eine Vielzahl von Gleichrichtern (4), welche mit jeweils einer der Vielzahl von sekundärseitigen Wicklungen (3b) gekoppelt sind, und welche dazu ausgelegt sind, die Ausgleichsspannung des Wechselrichters (2) gleichzurichten und die gleichgerichtete Ausgleichsspannung in jeweils eines der Vielzahl von Energiespeicherzellen und - modulen (7) einzuspeisen,
- eine Steuervorrichtung (8), welche mit dem Wechselrichter (2) gekoppelt ist, wobei der Transformator (3) weiterhin eine sekundärseitige Hilfswicklung (3c) aufweist, welche mit der Steuervorrichtung (8) gekoppelt ist, **dadurch** gekennzeichnet, dass
- die Steuervorrichtung (8) dazu ausgelegt ist, den Pegel der Ausgleichsspannung in Abhängigkeit von der Gesamtspannung des Energiespeichers (6) und der Anzahl der Energiespeicherzellen und -module (7) des Energiespeichers (6) einzustellen und/oder die Ausgleichsspannung über die sekundärseitige Hilfswicklung (3c) zu erfassen, und den Wechselrichter (2) in Abhängigkeit von der erfassten Ausgleichsspannung zu regeln, und
- eine Vielzahl von Filterstufen (5) vorgesehen sind, welche jeweils zwischen die Vielzahl von Gleichrichtern (4) und die Vielzahl von Energiespeicherzellen und -modulen (7) gekoppelt sind, wobei die Vielzahl von Filterstufen (5) jeweils Tiefpassfilter mit einer Spule (5a) als Längszweipol und einem Kondensator (5b) als Querzweipol aufweisen, und welche dazu ausgelegt sind, die gleichgerichtete Ausgleichsspannung zu glätten.

2. System (10), mit:
einem Energiespeicher (6), welcher Anschlüsse (6a, 6b) zum Bereitstellen einer Gesamtspannung und eine Vielzahl von zwischen den Anschlüssen (6a, 6b) in Serie geschalteten Energiespeicherzellen und -modulen (7) aufweist; und
einer Ladungsausgleichschaltung (1) nach einem der Ansprüche 1, 3 und 4, wobei die Vielzahl von Gleichrichtern (4) der Ladungsausgleichschaltung (1) jeweils mit einem der Vielzahl von Energiespeicherzellen und -modulen (7) gekoppelt sind.

3. System (10) nach Anspruch 2, wobei die Energiespeicherzellen und -module (7) wiederaufladbare elektrische bzw. elektrochemische Speicherelemente, insbesondere Lithium-Ionen-Zellen oder-Akkumulatoren aufweisen.

4. Verfahren (20) zum Betreiben einer Ladungsausgleichschaltung (1) nach einem der Ansprüche 1 oder 2 zum Ausgleichen von Ladungsunterschieden in einem Energiespeicher (6), welcher Anschlüsse (6a, 6b) zum Bereitstellen einer Gesamtspannung und eine Vielzahl von zwischen den Anschlüssen (6a, 6b) in Serie geschalteten Energiespeicherzellen und -modulen (7) aufweist, mit den Schritten:
Umrichten (21) der Gesamtspannung des Energiespeichers (6) in eine Ausgleichsspannung, deren Pegel in Abhängigkeit von der Gesamtspannung des Energiespeichers (6) und der Anzahl der Energiespeicherzellen und -module (7) des Energiespeichers (6) einstellbar ist;
Übertragen (22) der Ausgleichsspannung mit einem Transformator (3) auf eine Vielzahl von sekundärseitigen Wicklungen (3b) des Transformators (3);
Gleichrichten (23) der übertragenen Ausgleichsspannungen; und
Einspeisen (25) der gleichgerichteten Ausgleichsspannungen in jeweils eines der Vielzahl von Energiespeicherzellen und -modulen (7);
Glätten (24) der gleichgerichteten Ausgleichsspannungen jeweils mithilfe einer Filterstufe (5); wobei das Umrichten (21) der Gesamtspannung des Energiespeichers (6) in eine Ausgleichsspannung ein Erfassen der Ausgleichsspannung über eine sekundärseitige Hilfswicklung (3c) des Transformators und ein Regeln des Umrichtens in Abhängigkeit von der erfassten Ausgleichsspannung umfasst.

## Claims

1. Charge equalization circuit (1) for an energy store (6) having a multiplicity of energy storage cells and modules (7) connected in series, having a transformer (3) with a primary-side winding (3a) and with a multiplicity of secondary-side windings (3b), **characterized by** the following features:
- an inverter (2), the input connections (1a) of which are coupled to connections (6a, 6b) of the energy store (6), and which is designed to convert the total voltage of the energy store (6) into an equalization voltage,
- the transformer (3) is coupled to the inverter (2),
- a multiplicity of rectifiers (4) which are coupled in each case to one of the multiplicity of secondary-side windings (3b) and are designed to rectify the equalization voltage of the inverter (2) and to feed the rectified equalization voltage into in each case one of the multiplicity of energy storage cells and modules (7),
- a control apparatus (8) which is coupled to the inverter (2), the transformer (3) also having a secondary-side auxiliary winding (3c) which is coupled to the control apparatus (8), **characterized in that**
- the control apparatus (8) is designed to set the level of the equalization voltage on the basis of the total voltage of the energy store (6) and the number of energy storage cells and modules (7) of the energy store (6) and/or to record the equalization voltage via the secondary-side auxiliary winding (3c) and to regulate the inverter (2) on the basis of the recorded equalization voltage, and
- a multiplicity of filter stages (5) are provided and are each coupled between the multiplicity of rectifiers (4) and the multiplicity of energy storage cells and modules (7), the multiplicity of filter stages (5) each having low-pass filters with a coil (5a) as a series two-terminal network and a capacitor (5b) as a parallel two-terminal network, and are designed to smooth the rectified equalization voltage.

2. System (10) having:
an energy store (6) having connections (6a, 6b) for providing a total voltage and a multiplicity of energy storage cells and modules (7) connected in series between the connections (6a, 6b); and
a charge equalization circuit (1) according to one of Claims 1, 3 and 4, the multiplicity of rectifiers (4) of the charge equalization circuit (1) each being coupled to one of the multiplicity of energy storage cells and modules (7).

3. System (10) according to Claim 2, the energy storage cells and modules (7) having rechargeable electrical or electrochemical storage elements, in particular lithium ion cells or rechargeable batteries.

4. Method (20) for operating a charge equalization circuit (1) according to either of Claims 1 and 2 for equalizing charge differences in an energy store (6) having connections (6a, 6b) for providing a total voltage and a multiplicity of energy storage cells and modules (7) connected in series between the connections (6a, 6b), having the steps of:
converting (21) the total voltage of the energy store (6) into an equalization voltage, the level of which can be set on the basis of the total voltage of the energy store (6) and the number of energy storage cells and modules (7) of the energy store (6);
using a transformer (3) to transmit (22) the equalization voltage to a multiplicity of secondary-side windings (3b) of the transformer (3) ;
rectifying (23) the transmitted equalization voltages; and
feeding (25) the rectified equalization voltages into in each case one of the multiplicity of energy storage cells and modules (7);
smoothing (24) the rectified equalization voltages with the aid of a filter stage (5) in each case; the conversion (21) of the total voltage of the energy store (6) into an equalization voltage comprising recording the equalization voltage via a secondary-side auxiliary winding (3c) of the transformer and regulating the conversion on the basis of the recorded equalization voltage.

## Revendications

1. Circuit d'équilibrage des charges (1) destiné à un accumulateur d'énergie (6) comportant une pluralité d'éléments et de modules accumulateurs d'énergie (7) connectés en série, un transformateur (3) ayant un enroulement côté primaire (3a) et une pluralité d'éléments côté secondaire (3b), **caractérisé par** les éléments caractéristiques suivants :
- un onduleur (2) dont les bornes d'entrée (1a) sont couplées à des bornes (6a, 6b) de l'accumulateur d'énergie (6), et qui est conçu pour convertir la tension totale de l'accumulateur d'énergie (6) en une tension d'équilibrage,
- le transformateur (3) est couplé à l'onduleur (2),
- une pluralité de redresseurs (4), qui sont respectivement couplés à une pluralité d'enroulements côté secondaire (3b) et sont conçus pour redresser la tension d'équilibrage de l'onduleur (2) et pour injecter la tension d'équilibrage redressée dans chacun de la pluralité d'éléments et de modules accumulateurs d'énergie (7),
- un dispositif de commande (8) qui est couplé à l'onduleur (2), dans lequel le transformateur (3) comporte en outre un enroulement auxiliaire côté secondaire (3c) qui est couplé au dispositif de commande (8), **caractérisé en ce que**
- le dispositif de commande (8) est conçu pour régler le niveau de la tension d'équilibrage en fonction de la tension totale de l'accumulateur d'énergie (6) et du nombre des éléments et des modules accumulateurs d'énergie (7) de l'accumulateur d'énergie (6) et/ou pour détecter la tension d'équilibrage par l'intermédiaire de l'enroulement auxiliaire côté secondaire (3c), et pour réguler l'onduleur (2) en fonction de la tension d'équilibrage détectée, et
- il est prévu une pluralité d'étages de filtrage (5) qui sont respectivement couplés entre la pluralité de redresseurs (4) et la pluralité d'éléments et de modules accumulateurs d'énergie (7), dans lequel la pluralité d'étages de filtrage (5) comportent respectivement des filtres passe-bas ayant une bobine (5a) en tant que dipôle longitudinal et un condensateur (5b) en tant que dipôle transversal, et qui sont conçus pour lisser la tension de condensation redressée.

2. Système (10) comportant :
un accumulateur d'énergie (6) comportant des bornes (6a, 6b) destinées à fournir une tension totale, et une pluralité d'éléments et de modules accumulateurs d'énergie (7) connectés en série entre les bornes (6a, 6b) ; et
un circuit d'équilibrage des charges (1) selon l'une quelconque des revendications 1, 3 et 4, dans lequel la pluralité de redresseurs (4) du circuit d'équilibrage des charges (1) sont respectivement couplés à l'un de la pluralité d'éléments et de modules accumulateurs d'énergie (7).

3. Système (10) selon la revendication 2, dans lequel les éléments et les modules accumulateurs d'énergie (7) comportent des éléments accumulateurs électriques ou électrochimiques rechargeables, notamment des éléments ou des accumulateurs au lithium-ion.

4. Procédé (20) de mise en fonctionnement d'un circuit d'équilibrage des charges (1) selon l'une quelconque des revendications 1 ou 2, destiné à compenser des différences de charge dans un accumulateur d'énergie (6), comportant des bornes (6a, 6b) destinées à fournir une tension totale et une pluralité d'éléments et de modules accumulateurs d'énergie (7) connectés en série entre les bornes (6a, 6b), comprenant les étapes consistant à :
convertir (21) la tension totale de l'accumulateur d'énergie (6) en une tension d'équilibrage dont le niveau peut être réglé en fonction de la tension totale de l'accumulateur d'énergie (6) et du nombre d'éléments et de modules accumulateurs d'énergie (7) de l'accumulateur d'énergie (6) ;
transmettre (22) la tension d'équilibrage au moyen d'un transformateur (3) à une pluralité d'enroulements côté secondaire (3b) du transformateur (3) ;
redresser (23) les tensions d'équilibrage transmises ; et
injecter (25) les tensions d'équilibrage redressées dans chacun de la pluralité d'éléments et de modules accumulateurs d'énergie (7) ;
lisser (24) respectivement les tensions d'équilibrage redressées à l'aide d'un étage de filtrage (5) ; dans lequel la conversion (21) de la tension totale de l'accumulateur d'énergie (6) en une tension d'équilibrage comprend une détection de la tension d'équilibrage par l'intermédiaire d'un enroulement auxiliaire côté secondaire (3c) du transformateur et une régulation de la conversion en fonction de la tension d'équilibrage détectée.
